# FASCICULE DE BREVET EUROPEEN

(11) **EP 1 635 645 B1**
(45) Date de publication et mention de la délivrance du brevet: **11.02.2009**
(21) Numéro de dépôt: 04713105.7
(22) Date de dépôt: 20.02.2004
(51) Int. Cl.: A23B 4/06, A23L 3/36

(54) **PROCEDE DE CONGELATION DE PRODUITS DE LA MER, GENRE CREVETTES OU LANGOUSTINES, ET DISPOSITIF DE MOULAGE POUR LA MISE EN OEUVRE DU PROCEDE**
GEFRIERVERFAHREN ZUR BEHANDLUNG VON MEERESPRODUKTEN WIE GARNELEN ODER LANGUSTEN, UND FORMVORRICHTUNG ZUR DURCHFÜHRUNG DES VERFAHRENS
METHOD OF FREEZING PRAWN- OR LOBSTER-TYPE SEAFOOD PRODUCTS AND MOULDING DEVICE FOR CARRYING OUT SAID METHOD

(30) Priorité: 21.02.2003 FR 0302190
(43) Date de publication de la demande: 22.03.2006
(73) Titulaire: France Agro Industries, 44340 Bouguenais (FR)
(72) Inventeur: BESNARDEAU, Guy, Antananarive 101 (MG)
(74) Mandataire: Catherine, Alain
(86) Numéro de dépôt international: PCT/FR2004/050072
(87) Numéro de publication internationale: WO 2004/075637

(56) Documents cités:
- CA-A- 1 151 369
- FR-A- 2 760 601
- US-A- 1 388 296
- US-A- 3 838 955
- US-A- 4 330 957
- US-A- 4 948 620
- PATENT ABSTRACTS OF JAPAN vol. 016, no. 066 (C-0912), 19 février 1992 (1992-02-19) & JP 03 262438 A (MITSUBISHI ELECTRIC CORP), 22 novembre 1991 (1991-11-22)

## Description

La présente invention concerne un procédé de congélation de denrées alimentaires, et plus particulièrement de produits de la mer genre crustacés (crevettes, langoustines ...) ; elle concerne en outre un dispositif pour la mise en oeuvre de ce procédé.

Les produits de la mer sont en général congelés après leur capture en vue de leur conservation, en attendant leur présentation à la vente au consommateur.

L'opération de congélation est réalisée de manière usuelle par trempage des produits à congeler dans un bain de liquide de traitement adapté, par exemple de type saumure froide. Les produits subissent pour cela de nombreuses manipulations, brassages et/ou transferts, qui augmentent les coûts de la main d'oeuvre et qui entraînent des détériorations des produits conditionnés.

Des dispositifs de moulage pour l'obtention de blocs congelés de poisson ont été développés, tel que décrit par exemple dans le document US-1 388 296.
Le dispositif de congélation en question est constitué d'une partie en forme de boîte formée d'un fond perforé qui est délimité par une ceinture de parois ; les parois longitudinales sont elles aussi munies de perforations.
Les poissons à congeler sont convenablement et précautionneusement rangés dans cette boîte. Une fois remplie, la boîte est fermée au moyen d'un couvercle, de structure similaire à celle de ladite boîte ; le couvercle correspondant a en particulier un calibre permettant son encastrement extérieur sur la boîte.
Les poissons ainsi conditionnés dans ce dispositif de moulage subissent l'opération de congélation par immersion dans un liquide réfrigérant approprié.

Cependant, les dispositifs de moulage connus à ce jour, comme par exemple celui objet du document US-1 388 296 précité, tout comme leur procédé d'utilisation, ne sont pas adaptés pour l'obtention de blocs congelés de crustacés, de calibre déterminé, à partir de produits en vrac.
Généralement, les crustacés en question sont directement congelés en vrac ; mais ils présentent alors un volume important et irrégulier ce qui peut poser problème lorsqu'ils sont placés dans les emballages de stockage, de transport et/ou de présentation à la vente.

La présente invention vise à remédier à ces inconvénients en proposant un procédé de congélation des produits de type crustacés permettant d'obtenir en un nombre d'étapes limité des blocs de produits congelés, de calibre prédéterminé, facilement transférables dans un emballage approprié pour leur stockage, leur transport et/ou leur présentation à la vente. Ce procédé permet en outre de produire des blocs de produits sous forme compressée.

Le procédé de congélation de produits de la mer, conforme à l'invention, consiste :
- à placer une quantité déterminée de produit dans une structure de moulage approprié,
- à presser les produits contenus dans la structure de moulage pour en réduire le volume, au moyen d'un organe poussoir, en forme de couvercle
- à verrouiller ledit organe poussoir sur ladite structure de moulage l'ensemble structure de moulage et organe poussoir forme un dispositif de moulage,
- à faire subir aux produits une opération de congélation dans ledit dispositif,
- à extraire le bloc de produit congelé dudit dispositif de moulage, et
- à conditionner le bloc de produit congelé dans un emballage approprié en vue de son stockage, son transport et/ou sa présentation à la vente.
   Le pressage correspondant est très léger, il est adapté pour éviter la détérioration des produits tout en assurant l'obtention d'un volume congelé de calibre défini.

Selon un mode préféré de réalisation, le procédé de congélation consiste :
- à remplir une structure de moulage avec une quantité définie du produit alimentaire d'intérêt, ladite structure de moulage comportant un élément de fond, muni d'une pluralité de perforations régulièrement réparties, délimité par une ceinture de parois,
- à faire subir une opération de compression aux produits contenus dans ladite structure de moulage au moyen d'un organe poussoir en forme de couvercle, également muni d'une pluralité de perforations régulièrement réparties ; l'ensemble structure de moulage/organe poussoir constituant le dispositif de moulage,
- à faire subir aux produits contenus dans la structure de moulage une opération de congélation par un liquide de traitement, de préférence par arrosage du liquide de traitement sur le dispositif de moulage,
- à extraire de la structure de moulage le bloc de produit congelé, et
- à conditionner ce bloc congelé dans un emballage approprié pour son stockage, son transport et/ou sa présentation à la vente.
   De préférence encore, l'opération de conditionnement du bloc congelé consiste
- à coiffer ladite structure de moulage par ledit emballage après l'opération de congélation, puis - à retourner l'ensemble de sorte que l'emballage se retrouve en position inférieure ; le bloc de produit congelé glisse alors par simple gravité au sein de l'emballage, et la structure de moulage peut être retirée par un déplacement vertical vers le haut.

La présente invention a également pour objet un dispositif de moulage pouvant être employé dans le procédé de congélation décrit ci-dessus.
Ce dispositif de moulage comprend - d'une part, une structure de moulage de forme générale parallélépipédique, destinée à contenir le produit à congeler, constituée d'un fond bordé par une ceinture de parois latérales, lequel fond est muni d'une pluralité de perforations régulièrement réparties, et - d'autre part, un organe poussoir en forme de couvercle permettant l'obturation de ladite structure de moulage, lequel organe poussoir est également muni d'une pluralité de perforations régulièrement réparties ; la structure de moulage et l'organe poussoir associé comportent des moyens qui permettent le verrouillage dudit organe poussoir sur ladite structure de moulage.

Selon une autre particularité, la structure de moulage comporte des parois en légère dépouille pour faciliter l'extraction du bloc congelé. Par « légère dépouille », on entend une structure de moulage dans laquelle la section horizontale de l'élément de fond est inférieure à la section horizontale au niveau de la bordure libre de ladite structure de moulage. Cette caractéristique permet une extraction facilitée du bloc de produit congelé.

Toujours selon l'invention, l'organe poussoir est muni d'une ceinture de rebords périphériques, formant une cuvette pour assurer une bonne répartition du liquide de traitement sur les produits.

De préférence, la structure de moulage comporte une section horizontale interne supérieure au calibre externe de l'organe poussoir, afin de permettre l'emboîtement au moins partiel dudit organe poussoir au sein de ladite structure de moulage lors de l'opération de compression des produits.

De préférence encore, le dispositif de moulage comporte des moyens de verrouillage permettant - de solidariser l'organe poussoir à la structure de moulage, et - de déterminer la hauteur de fixation de l'organe poussoir au sein de la structure de moulage ; cette caractéristique permet de définir le calibre du bloc de produits congelés.

Selon une forme particulière de réalisation, ces moyens de verrouillage consistent en un ou plusieurs ergots aménagés sur deux extrémités opposées dudit organe poussoir, l'une des extrémités étant munie d'ergots de type fixes, et l'autre extrémité étant munie d'ergots de type rétractables, associés à des moyens qui permettent leur verrouillage en position active, l'ensemble de ces ergots étant destinés à s'insérer dans des orifices complémentaires aménagés dans les parois latérales de la structure de moulage. Par « position active », on entend la position dans laquelle les ergots forment une saillie permettant leur insertion dans les orifices aménagés dans les parois latérales de la structure de moulage.

Toujours selon cette forme particulière de réalisation, l'organe poussoir est muni d'un bras de manoeuvre articulé selon un axe disposé à courte distance de l'extrémité opposée à celle munie des ergots fixes ; l'extrémité dudit bras de manoeuvre juxtaposée à l'axe de rotation forme les ergots rétractables dont la saillie est fonction de sa position d'articulation.

Selon encore une caractéristique, la structure de moulage comporte au moins deux poignées de suspension fixées sur la partie inférieure de deux parois latérales en opposition de la structure de moulage, pour permettre le coiffage de ladite structure de moulage par un emballage approprié de réception du bloc de produits congelés.

Toujours selon l'invention, la structure de moulage comporte au moins une paroi transversale s'étendant entre deux parois latérales, de sorte à former deux compartiments. Cette structure de moulage permet avantageusement la production de plusieurs blocs de produits congelés simultanément, par la mise en oeuvre d'une seule procédure de congélation.
De préférence, deux parois opposées de la structure de moulage comportent chacune une fente verticale en vis-à-vis, deux parois transversales étant aménagées de part et d'autre desdites fentes, pour permettre le coiffage simultané de ladite structure de moulage par deux emballages de réception des blocs de produits congelés.

Mais l'invention sera encore illustrée, sans être aucunement limitée, par la description suivante de modes particuliers de réalisation, donnés seulement à titre indicatif, et représentés sur les dessins annexés dans lesquels :
- la figure 1 illustre en plusieurs étapes 1a à 1f, un procédé de congélation conforme à l'invention ;
- les étapes 2a à 2c de la figure 2 illustrent une alternative aux étapes 1e à 1f de la figure 1, correspondant aux opérations de conditionnement du bloc congelé ;
- la figure 3 est une vue en perspective d'un dispositif de moulage conforme à l'invention, la structure de moulage et son organe poussoir étant représentés sous forme dissociée ;
- la figure 4 est une vue en perspective du dispositif de moulage conforme à la figure 3, l'organe poussoir étant ici représenté emboîté dans la structure de moulage, mais non verrouillé ;
- la figure 5 est une vue en perspective du dispositif de moulage conforme aux figures 3 et 4, avec l'organe poussoir verrouillé sur la structure de moulage.

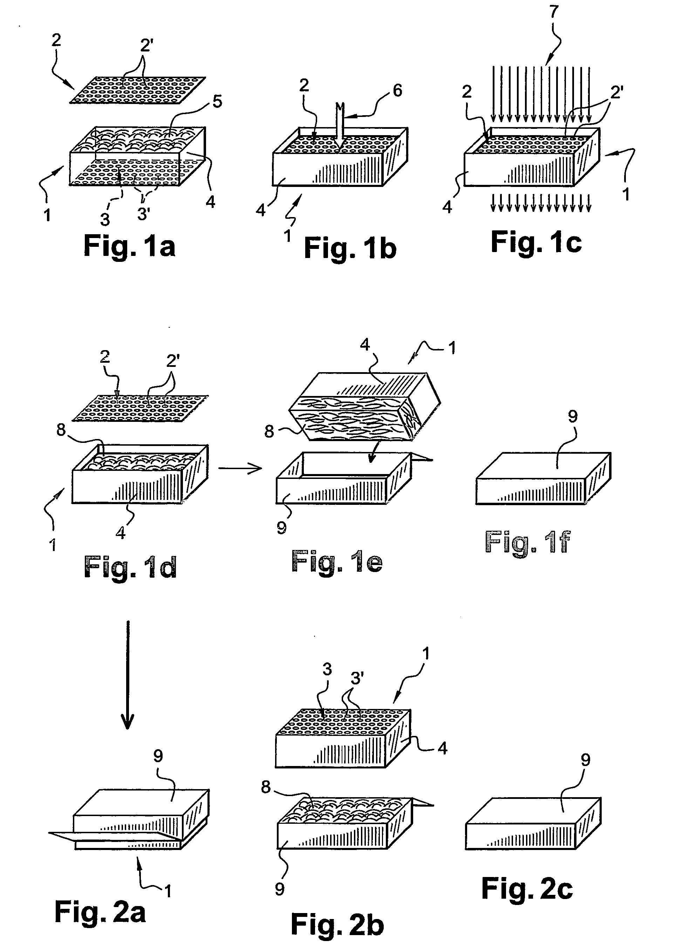

Une forme particulière de réalisation du procédé de congélation conforme à l'invention est représentée schématiquement sur la figure 1.

La figure 1a représente un dispositif de moulage constitué d'une structure de moulage 1 et d'un organe poussoir 2.
La structure de moulage 1, de forme générale parallélépipédique, comprend un élément de fond 3 muni d'une pluralité de perforations 3' régulièrement réparties ; cet élément de fond 3 est entouré d'une ceinture de parois latérales 4 définissant une ouverture supérieure. On remarque au sein de la structure de moulage 1 la présence de produits alimentaires 5, de type produits de la mer (crevettes ou langoustines) ; les produits peuvent être disposés en vrac dans cette structure de moulage.

L'organe poussoir 2 en forme de couvercle est également muni d'une pluralité de perforations 2' régulièrement réparties. Il présente des dimensions correspondant, au jeu près, aux dimensions internes de la structure de moulage 1.

L'organe poussoir 2 est destiné à se positionner horizontalement au niveau de l'ouverture de la structure de moulage 1, puis à subir une poussée verticale 6 de sorte à compresser les produits 5 contenus dans la structure de moulage, tel que représenté sur la figure 1 b.

Cet organe poussoir 2 est au final verrouillé au sein de la structure de moulage 1, à une hauteur prédéfinie de sorte à délimiter le calibre du bloc de produits congelés. La compression exercée par l'organe poussoir 2 sur les produits 5 doit être suffisante pour diminuer le volume final du bloc de produit congelé par rapport à une congélation en l'absence de compression, tout en évitant ou tout en limitant les détériorations des produits 5.

Une fois constitué, le dispositif de moulage 1, 2, chargé des produits 5 est soumis à l'opération de congélation telle que représentée sur la figure 1c
Cette opération de congélation est réalisée par arrosage d'un liquide de traitement approprié 7 sur le couvercle poussoir 2. Le liquide de traitement 7 traverse les orifices 2' aménagés sur le couvercle; il ruisselle sur et entre les produits alimentaires 5, pour finir par s'écouler par les perforations 3' aménagées dans l'élément de fond 3 de la structure de moulage 1.

Lorsque les produits 5 sont sous forme de bloc congelé 8, comme représenté sur la figure 1d, l'organe poussoir 2 est déverrouillé et peut être dissocié de la structure de moulage 1.
Le bloc congelé 8 est alors extrait par retournement de la structure de moulage 1 ; il glisse hors de ladite structure 1 pour être réceptionné dans un emballage de conditionnement 9 en carton par exemple, tel que représenté sur la figure 1e. Le bloc 8 de produits congelés se trouve alors sous sa forme finale, à savoir dans un emballage 9 adapté pour son stockage, son transport et/ou sa présentation à la vente comme représenté figure 1f.

Le procédé conforme à l'invention permet l'obtention d'un bloc congelé 8 de calibre déterminé constitué de produits 5 dans un certain état de compression. Ce procédé permet d'accroître la quantité de produit dans un bloc de calibre déterminé, par rapport à un procédé ne présentant pas ces étapes de congélation sous forme compressée.
Ce résultat est plus particulièrement obtenu par le maintien en état de compression des produits alimentaires 5 lors de l'étape de congélation, grâce à l'organe poussoir 2.

La compression permet une certaine réorganisation des produits 5 contenus dans la structure de moulage 1, notamment en limitant les espaces vides.

La figure 2 est une représentation schématique d'une forme alternative du procédé de congélation. Ce procédé se distingue de celui décrit ci-dessus, figure 1, par le remplacement des étapes d'extraction et de conditionnement représentées figures 1e et 1f par une méthode illustrée figures 2a à 2c.

Selon cette alternative, après l'obtention du bloc 8 de produits congelé s et enlèvement de l'organe poussoir 2, l'emballage 9 doit tout d'abord être positionné de sorte à coiffer la structure de moulage 1 comme représenté sur la figure 2a.
L'ensemble structure de moulage 1/emballage 9 est ensuite retourné de sorte que l'ouverture de la structure de moulage 1 s'oriente vers le bas.
Pour finir, la structure de moulage 1 est déplacée verticalement vers le haut. Le bloc congelé 8 demeure, du fait de la gravité, au sein de l'emballage 9, tel que représenté sur la figure 2b, et il se trouve au final conditionné dans son emballage 9, figure 2c.
Cette forme alternative de réalisation permet d'accélérer et de faciliter le conditionnement des blocs congelés. Elle permet en outre d'éviter de toucher le bloc congelé, ce qui peut être source de contamination ou de salissure.

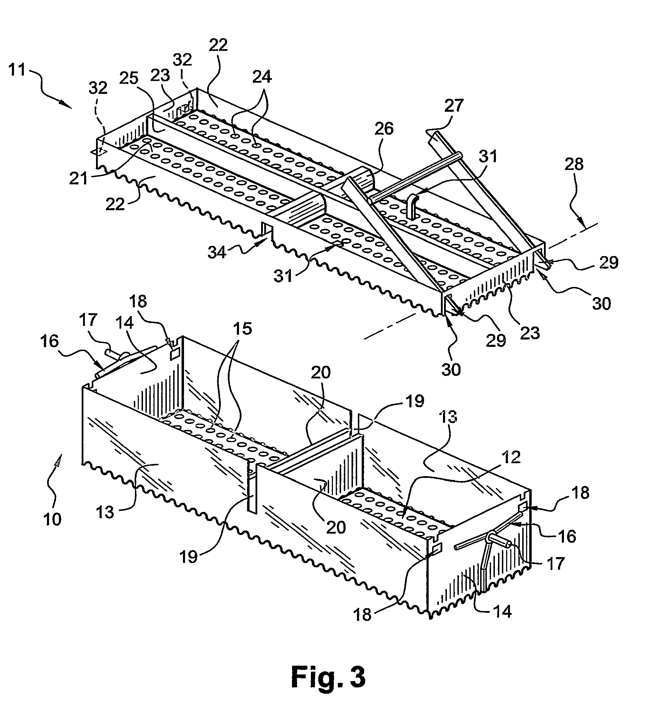

Les figures 3 à 5 représentent un mode de réalisation particulier d'un dispositif de moulage conforme à l'invention, permettant la mise en oeuvre du procédé de congélation décrit ci-dessus.

Ce dispositif de moulage est constitué de deux éléments structurels principaux : une structure de moulage 10 et un organe poussoir ou pressoir 11 en forme de couvercle.

La structure de moulage 10 présente une forme générale parallélépipédique comportant un élément de fond rectangulaire 12 bordé par deux parois latérales 13 et par deux parois d'extrémités 14 ; cette structure de moulage 10 est ouverte sur sa partie supérieure.

L'élément de fond 12 est muni d'une pluralité de perforations 15 régulièrement réparties.

Les parois d'extrémités 14 comportent chacune une poignée de suspension 16, laquelle poignée est fixée uniquement au niveau de la partie inférieure de ladite paroi d'extrémité 14. Cette poignée 16 comporte un axe 17 permettant l'accrochage de la structure de moulage 10 notamment sur un système de chaînes convoyeuses d'une installation de congélation appropriée.
Chaque paroi d'extrémité 14 comporte en outre deux orifices 18 aménagés latéralement dans sa partie supérieure. Tel que décrit ultérieurement, ces orifices 18 sont destinés à coopérer avec des moyens de solidarisation aménagés sur l'organe poussoir 11.

Les parois latérales 13 sont munies chacune d'une fente 19 en forme de U ; les deux fentes 19 sont aménagées verticalement, en vis-à-vis. Deux parois transversales 20 s'étendent de part et d'autre de ces fentes verticales 19 ; elles sont disposées parallèlement entre elles, mais aussi parallèlement aux parois d'extrémités 14.

L'organe poussoir 11 est constitué d'un élément de fond 21 bordé par deux rebords de côtés 22 et par deux rebords d'extrémités 23 ; l'élément de fond 21 de forme générale rectangulaire est muni d'une pluralité de perforations 24 uniformément réparties. Il présente un calibre externe qui correspond, au jeu près, au calibre interne de la structure de moulage 10 pour permettre son emboîtement au moins partiel au sein de cette structure 10.
L'organe poussoir 11 comporte en outre une traverse 25 s'étendant parallèlement aux rebords de côtés 22, entre les rebords d'extrémités 23, et un cache de jointure 26, de section en U inversé, s'étendant entre les rebords de côtés 22, de sorte à recouvrir une lumière transversale 34 aménagée dans l'élément de fond 21, laquelle lumière 34 s'étend entre les rebords de côtés 22 et présente une largeur légèrement supérieure à la distance séparant les deux parois transversales 20 de la structure de moulage 10.

De plus, l'organe poussoir 11 comporte des moyens permettant son verrouillage sur la structure de moulage 10.
D'une part, l'organe poussoir 11 est muni d'un bras de manoeuvre 27, en forme de U, articulé selon un axe 28, parallèle et à courte distance d'un des rebords d'extrémités 23. Les extrémités du bras de manoeuvre 27, au niveau du rebord d'extrémité 23 s'étendent sur une courte distance, formant deux butées amovibles 29. Ces deux butées 29 en saillie traversent le rebord d'extrémité 23 juxtaposé à l'axe d'articulation 28, au niveau de deux lumières 30 adaptées. La longueur de la saillie desdites butées 29 au-delà du rebord d'extrémité 23 est fonction de la position d'articulation du bras de manoeuvre 27.
On peut également remarquer la présence de deux doigts recourbés 31, aménagés sur l'élément de fond 21, destinés à permettre le verrouillage du bras de manoeuvre 27, comme expliqué plus loin.
D'autre part, le rebord d'extrémité 23 opposé est muni de deux ergots fixes 32, dont la fonction sera expliquée ci-dessous.

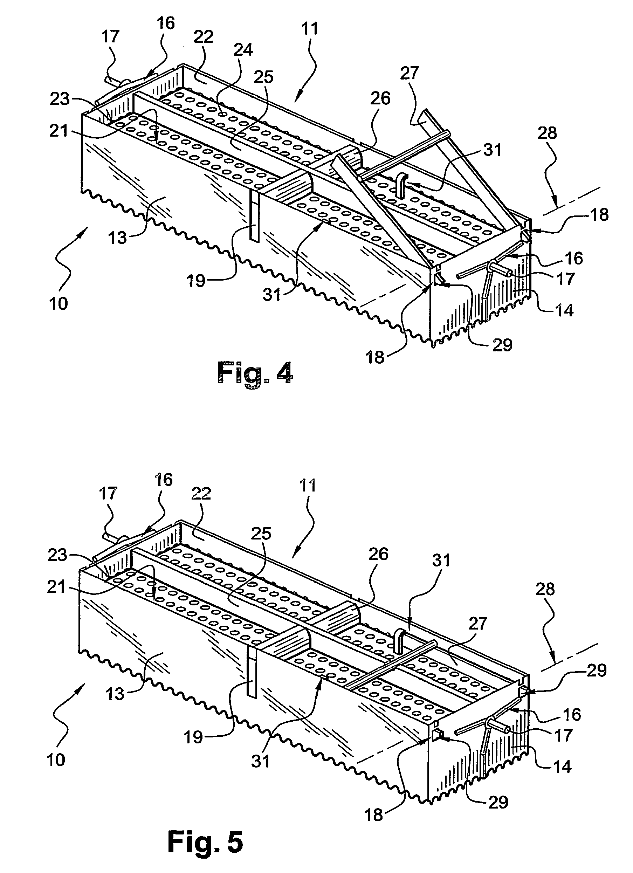

De manière préférentielle, l'emboîtement de l'organe poussoir 11 dans la structure de moulage 10 est obtenu de la manière suivante :
- les deux ergots fixes 32 sont tout d'abord introduits dans les deux orifices 18 d'une des parois d'extrémités 14 de la structure de moulage 10,
- l'organe poussoir 11 est ensuite rabattu au sein de la structure de moulage 10, tel que représenté sur la figure 4, les butées 29 étant escamotées par la position relevée du bras 27, puis
- l'organe poussoir 11 est verrouillé au sein de la structure de moulage 10, tel que représenté sur la figure 5, ce verrouillage étant obtenu par l'abaissement du bras de manoeuvre 27 de sorte qu'il vienne se positionner contre l'élément de fond 21 de l'organe poussoir 11 ; dans cette position, les ergots rétractables 29 sont en saillie et traversent les orifices 18 de la paroi d'extrémité 14 en regard.

Lorsque l'organe poussoir 11 est emboîté dans la structure de réception 10, les extrémités des parois transversales 20 traversent la lumière 34 de l'élément de fond 21 pour se positionner juste sous le cache de jointure 26.

Comme on peut l'observer encore sur la figure 5, le bras de manoeuvre 27 est bloqué dans cette position de verrouillage par les deux doigts recourbés précités 31. Ce blocage est obtenu - par une pression transversale exercée sur le bras de manoeuvre 27 pendant son articulation vers l'élément de fond 21, - puis par un arrêt de cette pression transversale lorsque ledit bras 27 est au contact dudit élément de fond 21, de sorte que ledit bras 27 vienne se placer élastiquement sous les doigts 31.

L'organe poussoir 11 solidarisé et verrouillé sur la structure de moulage 10, tel que représenté figure 5, forme le dispositif de moulage 10, 11.

On remarque que l'organe poussoir 11 peut être fixé dans les deux orientations sur la structure de moulage 10, et il n'existe en conséquence pas de sens particulier de positionnement.

Bien entendu, en pratique, les produits crustacés à conditionner sous forme de blocs congelés seront disposés, éventuellement en vrac, au sein de la structure de moulage 10 avant la mise en position de l'organe poussoir 11 ; toujours avant la mise en place de l'organe poussoir 11, on peut secouer modérément la structure de moulage 10, et/ou effectue r u n léger brassage manuel, pour assurer une répartition homogène des produits.
La mise en place de l'organe poussoir 11 assure une pression modérée sur les produits contenus dans la structure de moulage 10. Cette compression est facilitée par la présence du bras de manoeuvre 27, permettant de faire levier lors de la mise en place dudit organe poussoir 11.

Le dispositif de moulage 10, 11, une fois assemblé, peut être soumis à une opération d'arrosage par un liquide de traitement approprié pour permettre la congélation des produits conditionnés, et pour obtenir un bloc calibré.
Cet arrosage va s'effectuer directement sur l'organe poussoir 11 ; la ceinture de rebords 22, 23 permet de retenir une couche de liquide de traitement au niveau de l'élément de fond 21. Cette couche de liquide permet avantageusement un écoulement homogène du liquide de traitement dans le dispositif de moulage 10, 11.
En pratique, le liquide de traitement passe à travers les orifices 24 aménagés dans l'élément de fond 21 de l'organe poussoir 11, circule sur les produits conditionnés, et s'évacue par les orifices 15 aménagés dans l'élément de fond 12 de la structure de moulage 10.

Le dispositif de moulage 10, 11 illustré sur les figures permet la production simultanée de deux blocs de produits congelés par la réalisation d'une seule procédure de congélation. Cela est rendu possible par la présence des parois transversales 20, permettant de délimiter deux compartiments indépendants.
Les blocs de produits conditionnés obtenus seront alors d'un calibre déterminé, délimité en haut par la face inférieure de l'élément de fond 21 de l'organe poussoir 11, en bas par la face supérieure de l'élément de fond 12 de la structure de moulage 10, sur les côtés par les faces internes des parois de côtés 13, par une paroi transversale 20 et par une paroi d'extrémité 14 en vis-à-vis.

Bien entendu, il est possible d'envisager de concevoir une structure de moulage 10 ne comportant pas de paroi transversale 20, afin de produire un unique bloc de produit congelé. Au contraire, on peut également envisager d'aménager un nombre accru de parois transversales afin d'obtenir un nombre plus important de blocs congelés.

Il est à noter que les moyens de solidarisation entre l'organe poussoir 11 et la structure de moulage 10 déterminent l'épaisseur du bloc congelé. Il est alors possible d'envisager la fabrication d'une structure de moulage 10 dont les parois d'extrémités 14 comporteraient des orifices 18 à des hauteurs différentes, pour produire des blocs de produits congelés de calibre différent.

Les blocs de produits congelés une fois formés pourront être transférés dans des emballages adaptés. En pratique, la forme de la structure de moulage 10 permet de la coiffer par deux emballages appropriés en même temps, pour effectuer l'extraction simultanée des deux blocs, conformément à la procédure illustrée figure 2 ; cela est rendu possible par la présence des deux fentes 19 en vis-à-vis et par la fixation particulière des poignées 17 au niveau de la partie inférieure des parois d'extrémités 14.

Bien entendu, ce dispositif de moulage 10, 11 peut être utilisé dans tout autre procédé de congélation adapté pour obtenir un bloc de produit congelé.

## Revendications

1. Procédé de congélation de denrées alimentaires de type crustacés, genre crevettes ou langoustines, **caractérisé en ce qu'**il consiste :
- à placer une quantité définie de produits (5) dans une structure de moulage (1, 10),
- à presser lesdits produits (5) contenus dans ladite structure de moulage (1, 10) pour en réduire le volume, au moyen d'un organe poussoir (2, 11), en forme de couvercle,
- à verrouiller ledit organe poussoir (2, 11) sur ladite structure de moulage (1, 10), l'ensemble structure de moulage (1, 10) et organe poussoir (2, 11) formant un dispositif de moulage (1,2; 10, 11),
- à faire subir auxdits produits (5) une opération de congélation dans ledit dispositif (1, 2 ; 10, 11),
- à extraire le bloc de produits congelés (8) dudit dispositif (1, 2 ; 10, 11), et
- à conditionner ce bloc congelé (8) dans un emballage approprié (9) pour son stockage, son transport et/ou sa présentation à la vente.

2. Procédé selon la revendication 1, **caractérisé en ce qu'**il consiste :
- à placer une quantité définie de produits (5) dans une structure de moulage (1, 10) munie d'une ouverture supérieure et dont le fond (3, 12) comporte une pluralité de perforations (3', 15) régulièrement réparties,
- à presser lesdits produits (5) au moyen d'un organe poussoir (2, 11) en forme de couvercle muni d'une pluralité de perforations (2', 24) régulièrement réparties, l'ensemble structure de moulage (1, 10) et organe poussoir (2, 11) formant le dispositif de moulage (1, 2 ; 10, 11),
- à faire subir auxdits produits (5) une opération de congélation au moyen d'un liquide de traitement (7),
- à extraire le bloc de produits congelés (8) dudit dispositif (1, 2 ; 10, 11), et
- à conditionner ce bloc congelé (8) dans un emballage approprié (9) pour son stockage, son transport et/ou sa présentation à la vente.

3. Procédé selon la revendication 2, **caractérisé en ce qu'**il consiste à faire subir aux produits (5) une opération de congélation dans le dispositif de moulage (1, 2 ; 10, 11) par arrosage du liquide de traitement (7).

4. Procédé selon l'une quelconque des revendications 1 à 3, **caractérisé en ce que** l'opération de conditionnement du bloc de produits congelés (8) dans son emballage (9) consiste - à coiffer la structure de moulage (1, 10) par ledit emballage (9), puis - à retourner l'ensemble avant d'extraire ladite structure (1, 10).

5. Dispositif de moulage pour la mise en oeuvre du procédé selon l'une quelconque des revendications 1 à 4, **caractérisé en ce qu'**il comprend une structure de moulage (1, 10) de forme générale parallélépipédique constituée d'un fond (3, 12), muni d'une pluralité de perforations (3', 15) régulièrement réparties, et bordé par une ceinture de parois latérales (4 ; 13, 14), laquelle structure (1, 10) est associée à un organe poussoir (2, 11), en forme de couvercle, muni également d'une pluralité de perforations (2', 24) régulièrement réparties, lequel organe poussoir (2, 11) comporte des moyens qui permettent son verrouillage sur ladite structure de moulage (1, 10).

6. Dispositif de moulage selon la revendication 5, **caractérisé en ce qu'**il comprend une structure de moulage (10) dont la ceinture de parois (13, 14) est en légère dépouille, pour faciliter l'extraction du bloc congelé.

7. Dispositif de moulage selon l'une quelconque des revendications 5 ou 6, **caractérisé en ce qu'**il comprend un organe poussoir (11) muni d'une ceinture de rebords périphériques (22, 23), formant une cuvette pour assurer une répartition efficace du liquide de traitement sur les produits.

8. Dispositif de moulage selon l'une quelconque des revendications 5 à 7, **caractérisé en ce qu'**il comprend un organe poussoir (2, 11) dont les dimensions externes sont légèrement inférieures à la section horizontale interne de la structure de moulage (1, 10), pour permettre son insertion au moins partielle dans ladite structure de moulage (1, 10) lors de l'opération de pressage des produits.

9. Dispositif de moulage selon la revendication 8, **caractérisé en ce qu'**il comporte des moyens permettant un verrouillage de l'organe poussoir (11) à un niveau défini à l'intérieur de la structure de moulage (10), pour calibrer le bloc de produits congelés.

10. Dispositif de moulage selon la revendication 9, **caractérisé en ce que** les moyens permettant le verrouillage sont constitués, d'une part, d'ergots (29, 32) aménagés au niveau de deux extrémités opposées (23) dudit organe poussoir (11), les ergots (32) de l'une des extrémités (23) étant fixes et les ergots (29) de l'autre extrémité étant rétractables et associés à des moyens qui permettent leur verrouillage en position active, et, d'autre part, d'orifices complémentaires (18) aménagés dans la ceinture de paroi (13, 14) de la structure de moulage (10) dans lesquels les ergots (29, 32) sont destinés à s'insérer.

11. Dispositif de moulage selon la revendication 10, **caractérisé en ce qu'**il comporte un organe poussoir (11) muni d'un bras de manoeuvre (27) articulé selon un axe (28) disposé à courte distance de l'extrémité opposée à celle munie des ergots fixes (32), l'extrémité du bras de manoeuvre (27) juxtaposée à l'axe d'articulation formant les ergots rétractables (29), dont la saillie est fonction de la position d'articulation dudit bras (27).

12. Dispositif de moulage selon l'une quelconque des revendications 5 à 11, **caractérisé en ce qu'**il comprend une structure de moulage (10) munie de poignées de suspension (16), lesquelles poignées (16) sont fixées au niveau de la partie inférieure de deux parois en opposition (14) pour permettre le coiffage de ladite structure de moulage (10) par un emballage de réception du bloc de produits congelés.

13. Dispositif de moulage selon l'une quelconque des revendications 5 à 12, **caractérisé en ce qu'**il comprend une structure de moulage (10) intégrant au moins une paroi transversale (20) destinée à diviser la structure de moulage (10) en compartiments indépendants, de sorte à former en une seule opération de congélation au moins deux blocs de produits congelés.

14. Dispositif de moulage selon la revendication 13, **caractérisé en ce qu'**il comprend une structure de moulage (10) dont deux parois opposées (13) sont munies chacune d'une fente verticale (19) en vis-à-vis, deux parois transversales (20) étant aménagées de part et d'autre desdites fentes (19), pour permettre le coiffage simultané de ladite structure de moulage (10) par deux emballages de réception de blocs de produits congelés.

## Claims

1. A method for deep-freezing foodstuffs of the shellfish type, shrimp or langoustine type, **characterized in that** it consists in:
- arranging a determined amount of product (5) into an appropriate moulding structure (1, 10),
- pressing said products (5) contained in the moulding structure (1, 10) so as to reduce the volume, thanks to a pushing member (2, 11) under the shape of a cover,
- locking said pushing member (2, 11) on said moulding structure (1, 10), the moulding structure (1, 10) and pushing member (2, 11) assembly providing a moulding device (1,2; 10, 11),
- subjecting said products (5) to a deep-freezing operation in said device (1, 2; 10, 11),
- extracting the deep-frozen block of product (8) from the moulding device (1, 2; 10, 11), and
- packaging said deep-frozen block (8) in an appropriate package (9) for the purpose of being stored, transported and/or offered for sale.

2. A method according to claim 1, **characterized in that** it consists in:
- arranging a defined amount of products (5) into a moulding structure (1, 10), provided with a top opening and the bottom (3, 12) of which comprises a plurality of regularly distributed punched holes (3', 15),
- pressing said products (5) using a pushing member (2, 11), under the shape of a cover, provided with a plurality of regularly distributed punched holes (2', 24); the moulding structure (1, 10) and pushing member (2, 11) assembly providing the moulding device (1, 2; 10, 11),
- subjecting said products (5) to a deep-freezing operation using a processing liquid (7),
- extracting the block of deep-frozen products (8) from said device (1, 2; 10, 11), and
- packaging such deep-frozen block (8) in a package (9) appropriate for storing, transporting and/or offering it for sale.

3. A method according to claim 2, **characterized in that** it consists in subjecting the products (5) to a deep-freezing operation in the moulding device (1, 2; 10, 11) through spraying a processing liquid (7).

4. A method according to any of claims 1 to 3, **characterized in that** the packaging operation of the block of deep-frozen products (8) in its wrap (9) consists in covering the moulding structure (1, 10) with said wrap (9), then turning over the assembly before extracting said structure (1, 10).

5. A moulding device for implementing the method according to any of claims 1 to 4, **characterized in that** it comprises a parallelepipedic general shape moulding structure (1, 10), with a bottom (3, 12), being provided with a plurality of regularly distributed punched holes (3', 15), and bound by a belt of side walls (4; 13, 14), said moulding structure (1, 10) is associated with a pushing member (2, 11) under the shape of a cover, provided in turn with a plurality of regularly distributed punched holes (2', 24), said pushing member (2, 11) comprising means allowing it to be locked on said moulding structure (1, 10).

6. A device according to claim 5, **characterized in that** it comprises a moulding structure (10) with a belt of walls (13, 14) being slightly relieved in order to facilitate the extraction of the deep-frozen block.

7. A moulding device according to any of claim 5 or 6, **characterized in that** it comprises a pushing member (11) provided with a belt of peripheral rims (22, 23), forming a pan for ensuring an efficient distribution of the processing liquid onto the products.

8. A moulding device according to any of claims 5 to 7, **characterized in that** it comprises a pushing member (2, 11) with its external dimensions being slightly lower than the internal horizontal section of the moulding structure (1, 10) so as to allow it for being at last partially inserted into said moulding structure (1, 10) during the compression operation of the products.

9. A moulding device according to claim 8, **characterized in that** it comprises means for locking the pushing member (11) at a level defined inside the moulding structure (10), for sizing the block of deep-frozen products.

10. A moulding device according to claim 9, **characterized in that** the locking means comprise on the one hand studs (29, 32) arranged at the level of two opposite ends (23) of said pushing member (11), the studs (32) of one of such ends (23) being secured and the studs (29) of the other end being retractable and associated with means allowing them to be locked into an active position and, on the other hand, of complementary holes (18) arranged in the belt of walls (13, 14) of the moulding structure (10), inside which the studs (29, 32) are intended to be inserted.

11. A moulding device according to claim 10, **characterized in that** it comprises a pushing member (11) provided with an actuating arm (27) being hinged on an axis (28) arranged at a short distance from the end opposite that provided with secured studs (32); the end of the actuating arm (27) juxtaposed to the hinge axis forming retractable studs (29) the projection of which depends on the hinging position of said arm (27).

12. A moulding device according to any of claims 5 to 11, **characterized in that** it comprises a moulding structure (10) provided with hanging handles (16), said handles (16) are fixed at the level of the lower part of both facing walls (14) for allowing for said moulding structure (10) to be covered with a package receiving the block of deep-frozen products.

13. A moulding device according to any of claims 5 to 12, **characterized in that** it comprises a moulding structure (10) incorporating at least one transversal wall (20) intended to partition the moulding structure (10) in independent compartments, so as to form in one single deep-freezing operation at least two blocks of deep-frozen products.

14. A moulding device according to claim 13, **characterized in that** it comprises a moulding structure (10), having two opposite walls (13) being each provided with a facing vertical slot (19), two transversal walls (20) being arranged on both sides of said slots (19), for allowing said moulding structure (10) to be simultaneously covered by two packages receiving the blocks of deep-frozen products.

## Patentansprüche

1. Verfahren zum Einfrieren von Nahrungsmitteln des Typs Krebstiere, Gattung Garnelen oder Kaisergranate, **gekennzeichnet durch** die Schritte:
- Einbringen einer definierten Menge Produkte (5) in eine Formstruktur (1, 10);
- Pressen der Produkte (5), die in der Formstruktur (1, 10) enthalten sind, unter Reduktion ihres Volumens mittels eines Stößelelements (2, 11) in Form eines Deckels;
- Verriegeln des Stößelelements (2, 11) auf der Formstruktur (1, 10), wobei die Gesamtheit aus Formstruktur (1, 10) und Stößelelement (2, 11) eine Formvorrichtung (1, 2; 10, 11) bildet;
- Einfrieren der Produkte (5) in der Vorrichtung (1, 2; 10, 11);
- Entnehmen des Blocks von gefrorenen Produkten (8) aus der Vorrichtung (1, 2; 10, 11); und
- Verpacken dieses gefrorenen Blocks (8) in einer geeigneten Verpackung (9) für dessen Lagerung, Transport und/oder Präsentation zum Verkauf.

2. Verfahren gemäß Anspruch 1, **gekennzeichnet durch** die Schritte:
- Einbringen einer definierten Menge Produkte (5) in eine Formstruktur (1, 10), die mit einer oberen Öffnung versehen ist und deren Boden (3, 12) eine Vielzahl von regelmäßig verteilten Löchern (3', 15) umfasst;
- Pressen der Produkte (5) mittels eines Stößelelements (2, 11) in Form eines Deckels, der mit einer Vielzahl von regelmäßig verteilten Löchern (2', 24) versehen ist, wobei die Gesamtheit aus Formstruktur (1, 10) und Stößelelement (2, 11) die Formvorrichtung (1, 2; 10, 11) bildet;
- Einfrieren der Produkte (5) mittels einer Behandlungsflüssigkeit (7);
- Entnehmen des Blocks von gefrorenen Produkten (8) aus der Vorrichtung (1, 2; 10, 11); und
- Verpacken dieses gefrorenen Blocks (8) in einer geeigneten Verpackung (9) für dessen Lagerung, Transport und/oder Präsentation zum Verkauf.

3. Verfahren gemäß Anspruch 2, **gekennzeichnet durch** den Schritt des Einfrierens der Produkte (5) in der Formvorrichtung (1, 2; 10, 11) **durch** Übergießen mit der Behandlungsflüssigkeit (7).

4. Verfahren gemäß einem der Ansprüche 1 bis 3, **dadurch gekennzeichnet, dass** der Schritt des Verpackens des Blocks von gefrorenen Produkten (8) in seiner Verpackung (9) darin besteht, die Formstruktur (1, 10) mit der Verpackung (9) zu bedecken und dann das Ganze umzudrehen, bevor man die Struktur (1, 10) entnimmt.

5. Formvorrichtung zur Durchführung des Verfahrens gemäß einem der Ansprüche 1 bis 4, **dadurch gekennzeichnet, dass** sie eine Formstruktur (1, 10) mit im Wesentlichen parallelepipedischer Form umfasst, die aus einem Boden (3, 12) besteht, der mit einer Vielzahl von regelmäßig verteilten Löchern (3', 15) versehen und mit einem Gürtel aus Seitenwänden (4; 13, 14) umrandet ist, wobei die Struktur (1, 10) mit einem Stößelelement (2, 11) in Form eines Deckels assoziiert ist, das ebenfalls mit einer Vielzahl von regelmäßig verteilten Löchern (2', 24) versehen ist, wobei das Stößelelement (2, 11) Einrichtungen umfasst, mittels derer es auf der Formstruktur (1, 10) verriegelt werden kann.

6. Formvorrichtung gemäß Anspruch 5, **dadurch gekennzeichnet, dass** sie eine Formstruktur (10) umfasst, deren Gürtel aus Wänden (13, 14) eine leichte Verjüngung aufweist, um das Entnehmen des gefrorenen Blocks zu erleichtern.

7. Formvorrichtung gemäß einem der Ansprüche 5 oder 6, **dadurch gekennzeichnet, dass** sie ein Stößelelement (11) umfasst, das mit einem Gürtel aus peripheren Umrandungen (22, 23) versehen ist, die eine Schale bilden, um eine wirkungsvolle Verteilung der Behandlungsflüssigkeit auf den Produkten zu gewährleisten.

8. Formvorrichtung gemäß einem der Ansprüche 5 bis 7, **dadurch gekennzeichnet, dass** sie ein Stößelelement (2, 11) umfasst, dessen äußere Abmessungen geringfügig kleiner sind als der innere horizontale Querschnitt der Formstruktur (1, 10), damit es beim Schritt des Pressens der Produkte wenigstens teilweise in die Formstruktur (1, 10) eingesetzt werden kann.

9. Formvorrichtung gemäß Anspruch 8, **dadurch gekennzeichnet, dass** sie Einrichtungen umfasst, die eine Verriegelung des Stößelelements (11) auf einem definierten Niveau im Innern der Formstruktur (10) ermöglichen, um den Block von gefrorenen Produkten zu kalibrieren.

10. Formvorrichtung gemäß Anspruch 9, **dadurch gekennzeichnet, dass** die Einrichtungen, die die Verriegelung ermöglichen, aus Folgendem bestehen: einerseits aus Vorsprüngen (29, 32), die sich auf dem Niveau von zwei entgegengesetzten Enden (23) des Stößelelements (11) befinden, wobei die Vorsprünge (32) eines der Enden (23) fest sind und die Vorsprünge (29) des anderen Endes zurückziehbar sind und mit Einrichtungen verbunden sind, die ihre Verriegelung in aktiver Lage ermöglichen; und andererseits aus komplementären Öffnungen (18), die sich im Gürtel von Wänden (13, 14) der Formstruktur (10) befinden und in die die Vorsprünge (29, 32) eingesteckt werden können.

11. Formvorrichtung gemäß Anspruch 10, **dadurch gekennzeichnet, dass** sie ein Stößelelement (11) umfasst, das mit einem Betätigungshebel (27) versehen ist, der ein um eine Achse (28) schwenkbares Gelenk aufweist, das sich in geringem Abstand von dem Ende befindet, das dem mit festen Vorsprüngen (32) versehenen Ende entgegengesetzt ist, wobei das Ende des Betätigungshebels (27), das neben der Gelenkachse liegt, zurückziehbare Vorsprünge (29) bildet, deren Vorsprunggrad von der Schwenkposition des Hebels (27) abhängt.

12. Formvorrichtung gemäß einem der Ansprüche 5 bis 11, **dadurch gekennzeichnet, dass** sie eine Formstruktur (10) umfasst, die mit Aufhängegriffen (16) versehen ist, wobei die Griffe (16) auf dem Niveau des Unterteils von zwei einander gegenüberliegenden Wänden (14) fixiert sind, damit die Formstruktur (10) von einer Verpackung zur Aufnahme des Blocks von gefrorenen Produkten bedeckt werden kann.

13. Formvorrichtung gemäß einem der Ansprüche 5 bis 12, **dadurch gekennzeichnet, dass** sie eine Formstruktur (10) umfasst, die einstückig mit wenigstens einer Querwand (20) ausgebildet ist, welche die Formstruktur (10) in unabhängige Kompartimente unterteilen soll, so dass in einem einzigen Schritt des Einfrierens wenigstens zwei Blöcke von gefrorenen Produkten entstehen.

14. Formvorrichtung gemäß Anspruch 13, **dadurch gekennzeichnet, dass** sie eine Formstruktur (10) umfasst, von der zwei einander gegenüberliegenden Wände (13) jeweils mit einem vertikalen Schlitz (19) versehen sind, die einander gegenüberliegen, wobei sich zwei Querwände (20) beiderseits der Schlitze (19) befinden, damit die Formstruktur (10) gleichzeitig von zwei Verpackungen zur Aufnahme von Blöcken von gefrorenen Produkten bedeckt werden kann.
